# FASCICULE DE BREVET EUROPEEN

(11) **EP 2 462 000 B1**
(45) Date de publication et mention de la délivrance du brevet: **16.03.2016**
(21) Numéro de dépôt: 10752852.3
(22) Date de dépôt: 28.07.2010
(51) Int. Cl.: B60L 5/22, B60L 5/36

(54) **DISPOSITIF DE PRISE DE COURANT ELECTRIQUE SUR CATENAIRE**
STROMQUELLENVORRICHTUNG AUF EINER OBERLEITUNG
ELECTRIC CURRENT SOURCE DEVICE ON AN OVERHEAD LINE

(30) Priorité: 07.08.2009 FR 0903892
(43) Date de publication de la demande: 13.06.2012
(73) Titulaire: Clerc, Alain, 94110 Arcueil (FR)
(72) Inventeur: Clerc, Alain, 94110 Arcueil (FR)
(74) Mandataire: Flavenot, Bernard
(86) Numéro de dépôt international: PCT/FR2010/000548
(87) Numéro de publication internationale: WO 2011/015724

(56) Documents cités:
- FR-A1- 2 540 801
- GB-A- 914 290
- US-A- 5 124 510

## Description

La présente invention concerne les dispositifs de prise de courant électrique pour un véhicule électrique apte à se déplacer sur un sol, à partir d'une caténaire située dans un plan sensiblement parallèle au sol et à une distance de ce sol supérieure à la hauteur maximale du véhicule quand il roule sur le sol.

Le dispositif selon l'invention trouve un intérêt particulièrement intéressant pour les véhicules routiers ou ferroviaires, essentiellement les véhicules de type "trolleybus".

Il y a manifestement aujourd'hui, notamment à cause de la raréfaction des sources d'énergie, un intérêt pour les véhicules routiers de type "trolleybus" munis de pneumatiques et alimentés en énergie électrique à partir généralement d'une paire de lignes de contact ou caténaires par l'intermédiaire de deux perches munies à leur extrémité haute d'un réceptacle en forme de cuvette allongée bordée de flancs nommée "tête de perche", connu des hommes du métier sous le nom de "archet". Ce dernier présente l'avantage d'assurer à la fois le guidage mécanique de la perche par rapport à la caténaire et la captation du courant électrique. Cependant, le frotteur en carbone qu'il comporte présente l'inconvénient d'user très rapidement car sa surface de contact avec la caténaire est très petite. De plus, même si le véhicule se déplace à faible vitesse, la tête de perche est susceptible de dérailler sous l'effet des soubresauts provoqués par exemple par les imperfections de la chaussée et à cause des forces de guidage de faible intensité.

En outre, la continuité du guidage de l'archet, même lors du franchissement des intersections, impose la mise en place d'aiguillages aériens très lourds et très délicats à traverser. Des tentatives réussies ont été faites pour "empercher" les archets grâce à des systèmes de type "entonnoirs" fixés en des points particuliers du parcours qu'il faut franchir à très basse vitesse.

Enfin, les perches classiques pour ce type de véhicule ont une longueur d'environ six mètres. Elles peuvent donc faire des intrusions dans le gabarit des voies de circulation attenantes et provoquer des accrochages avec les éléments voisins, par exemple des camions, des immeubles, etc..

Le problème de l'emperchage des archets n'est donc toujours pas réellement résolu, ce qui crée un frein au développement de ce type de transport. Sinon, il aurait certainement eu un développement beaucoup plus important que celui dont il bénéficie à ce jour.

Ce système d'emperchage bien connu depuis fort longtemps, notamment par le US-A- 5 124 510 qui décrit un dispositif selon le preambule de la revendication 1 et le FR-A-2 540 801, ne peut donc pas convenir pour un véhicule appelé à parcourir des distances de l'ordre, par exemple, de plus de mille kilomètres par jour à une vitesse de l'ordre de plus de cent kilomètres par heure.

Or, ces performances sont indispensables pour ce type de véhicule s'il est appelé à se déplacer sur des voies de circulation dénommées "autoroutes électriques" par les hommes du métier dans le domaine et qui sont en cours d'étude pour un développement dans les tous prochains jours.

On connaît aussi les mobiles ferroviaires qui sont alimentés par un pantographe surmonté d'un support tactile ou archet transversal. Actuellement celui-ci se déplace uniquement dans le plan vertical et est suffisamment large pour ne pas courir le risque de quitter la caténaire. L'encombrement transversal de cet archet n'est pas un réel inconvénient pour les trains circulants à basse vitesse. En revanche, la résistance aérodynamique présentée par ce type d'archet, relativement importante, peut être rédhibitoire pour l'obtention de très hautes vitesses. La trainée aérodynamique du pantographe peut dépasser dix pour cent de la trainée totale et la portance, difficilement contrôlable en zone tourbillonnaire, peut faire varier la pression de contact entre l'archet et la caténaire, dans de grandes proportions.

Aussi, la présente invention a-t-elle pour but de réaliser un dispositif de prise de courant électrique pour un véhicule électrique apte à se déplacer sur un sol, à partir d'une caténaire située dans un plan sensiblement parallèle au sol et à une distance de ce sol supérieure à la hauteur maximale du véhicule quand il roule sur le sol, qui pallie en grande partie les inconvénients exposés ci-avant des dispositifs connus dans le domaine et qui réponde aussi aux impératifs inhérents à l'utilisation de ce type de véhicule.

Plus précisément, la présente invention a pour objet un dispositif pour relier un véhicule électrique à une caténaire et permettre l'alimentation en électricité de ce véhicule à partir du courant électrique passant dans la caténaire, ledit véhicule étant apte à se déplacer sur un sol et ladite caténaire étant située dans un premier plan sensiblement parallèle au dit sol à une distance de ce sol supérieure à la hauteur maximale du dit véhicule quand il roule sur le sol, tel que défini dans la revendication 1 annexée.

D'autres caractéristiques et avantages de la présente invention apparaîtront au cours de la description suivante donnée en regard des dessins annexés à titre illustratif mais nullement limitatif, dans lesquels :
La figure 1 est un schéma bloc d'un mode de réalisation du dispositif selon l'invention, pour prise de courant électrique sur une caténaire pour alimenter un véhicule électrique,
La figure 2 est une vue en perspective cavalière, sous forme relativement simplifiée, d'un mode de réalisation du dispositif selon l'invention en accord avec le schéma bloc représenté sur la figure 1, et
La figure 3 est un schéma bloc d'un mode de réalisation de certains moyens constitutifs du dispositif selon l'invention en accord avec les représentations selon les figures 1 et 2.

Le dispositif selon l'invention concerne un dispositif pour relier un véhicule électrique 1, de type trolleybus ou analogue, à au moins une caténaire 3 (généralement deux quand le véhicule est monté sur des moyens de roulement isolés électriquement) et permettre l'alimentation en électricité de ce véhicule à partir du courant électrique passant dans cette caténaire, ce véhicule étant apte à se déplacer sur un sol 2, qui est considéré pour la présente description comme sensiblement défini par une surface assimilable à une surface horizontale, et la caténaire 3 étant située dans un premier plan 4 sensiblement parallèle au sol à une distance de ce sol supérieure à la hauteur maximale du véhicule quand, bien entendu, il roule sur ce sol.

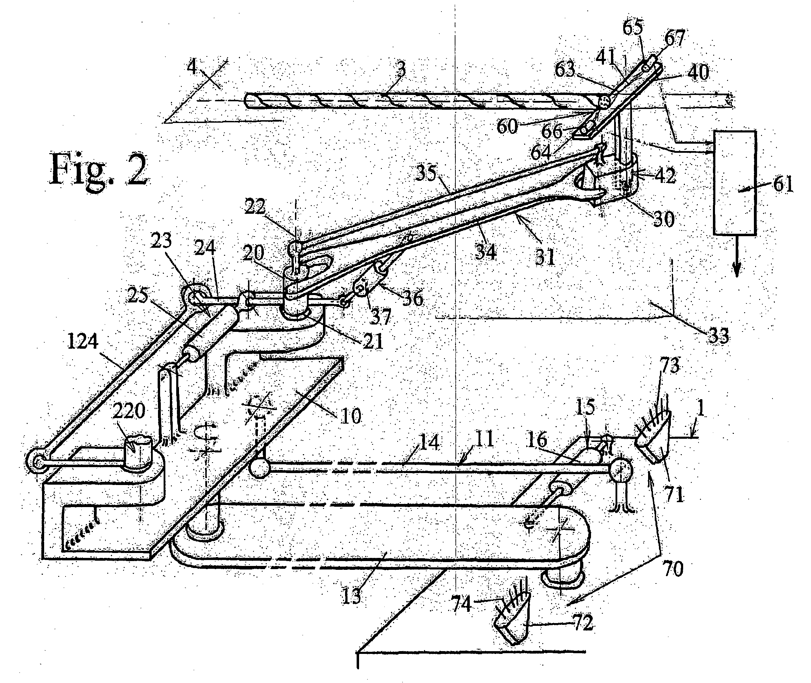

Le dispositif selon l'invention comporte une première platine 10, comme une plaque ou analogue, figure 2, des premiers moyens commandables 11 pour déplacer la première platine 10 parallèlement à elle-même par rapport au véhicule et dans un deuxième plan 12 sensiblement parallèle au premier plan 4, un pivot 20, des moyens 21 pour monter le pivot 20 en rotation sur la première platine 10 autour d'un premier axe 22 sensiblement perpendiculaire au deuxième plan 12, des deuxième moyens commandables 23 pour faire pivoter le pivot 20 par rapport à la première platine 10 autour de ce premier axe 22, une seconde platine 30, et des troisièmes moyens commandables 31 pour déplacer la seconde platine 30 parallèlement à elle-même par rapport au pivot 20 et dans un troisième plan 33 contenant le premier axe 22.

Le dispositif comporte en outre un archet 40 comportant une piste de prise de courant électrique 41 apte à frotter sur la caténaire 3, et des moyens 42 pour monter l'archet 40 sur la seconde platine 30 de façon que la piste de prise de courant électrique 41 soit avantageusement sensiblement parallèle aux premier et deuxième plans 4, 12 définis ci-dessus.

Selon une réalisation préférentielle, ces moyens 42 sont essentiellement constitués, comme schématiquement illustré, par un plongeur cylindrique dont une extrémité est solidaire fixement de l'archet 40 de façon que l'archet soit sensiblement perpendiculaire à l'axe longitudinal du plongeur, et dont l'autre extrémité pénètre dans un alésage creusé dans la seconde platine 30. En outre, ce plongeur est doté d'une clavette verticale montée coulissante dans une rainure creusée dans la seconde platine 30, pour éviter la rotation de l'archet 40 par rapport à la seconde platine 30.

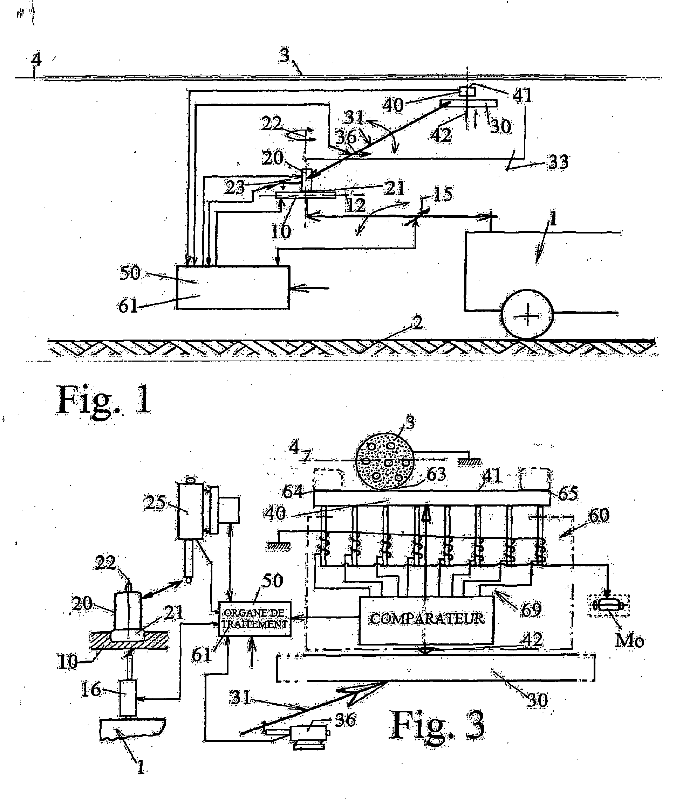

Il est en outre avantageusement prévu, entre le fond de l'alésage et l'extrémité pénétrante du plongeur, un élément élastique en compression, schématiquement illustré sur la figure 2, qui assure en souplesse le contact de l'archet 40 avec la caténaire, par le dessous de celle-ci, figures 1 à 3.

Comme illustré sur la figure 2, les premiers et troisièmes moyens commandables 11, 31 pour déplacer respectivement la première platine et la seconde platine 10, 30 comportent au moins deux bras 13-14, 34-35 dont deux extrémités sont associées en rotation à la première platine 10 et à la seconde platine 30, et dont les deux autres extrémités sont liées en rotation à l'élément par rapport auquel les première et seconde platines doivent être respectivement déplacées, à savoir le véhicule 1 et le pivot 20, de façon que les quatre extrémités des deux bras soient situées aux sommets d'un parallélogramme et que les deux bras 13-14, 34-35 forment de façon connue en elle-même un parallélogramme déformable.

Dans le mode de réalisation illustré, les deux bras 13, 14 des premiers moyens commandables 11 pivotent autour d'axes sensiblement perpendiculaires au plan 4, c'est-à-dire sensiblement verticaux, tandis que les deux bras 34, 35 des seconds moyens commandables 31 pivotent autour d'axes sensiblement parallèles au plan 4, c'est-à-dire sensiblement horizontaux.

Sur les figures, dans l'ensemble de ces deux paires de deux bras 13-14, 34-35, un dans chaque paire est celui qui assure essentiellement la transmission des efforts de déplacement respectivement des deux platines 10, 30. En se référant à la figure 2, le bras 13 relatif aux premiers moyens 11, dit "bras orienteur", a pour fonction de pré-positionner la platine 10 par rapport à la caténaire comme il sera décrit ci-après, tandis que le bras 34 relatif aux seconds moyens 31, dit "mini perche", a pour fonction de positionner l'archet 40 au contact de la caténaire 3.

Le dispositif comporte en outre des quatrièmes moyens commandables 15, 36 pour appliquer une force sur l'un des deux bras 13-14, 34-35.

Selon une réalisation préférentielle, ces quatrièmes moyens commandables 15, 36 sont constitués par un premier vérin 16, 37 et des moyens de commande 50 du vérin. Ces moyens de commande de vérin 50 peuvent comporter très schématiquement une source de fluide sous pression associée à une centrale électronique de traitement. Ces derniers éléments étant du domaine de l'homme du métier, ils ne seront pas plus amplement décrits ici, dans l'unique souci de simplifier la présente description.

Il est précisé que, par "vérin", au sens de la présente description, il est compris tout moyen permettant d'engendrer deux forces opposées, divergentes ou convergentes, quel que soit le type d'alimentation en énergie de ce moyen, électrique, fluidique sous pression, magnétique, etc.

A titre d'exemple, sur les figures, ces moyens de vérin sont de type pneumatique ou hydraulique et, façon conventionnelle, comprennent un cylindre et une tige-piston montée coulissante dans le cylindre. L'homme du métier saura choisir le type de vérin qui conviendra en fonction des situations et des objectifs à atteindre, et il n'est donc pas nécessaire de développer ici plus amplement la structure de ces moyens de vérin, par simple souci de simplifier la présente description.

De façon avantageuse, la rotation du bras orienteur 13 est commandée par le vérin 16 qui est un vérin hydraulique, tandis que la rotation de la mini perche 34 est commandée par le vérin 37 qui est un vérin pneumatique. En outre, la mini perche est relativement courte par rapport au bras orienteur 13. De ce fait, son inertie est faible, ce qui est plus favorable au bon suivi de la caténaire 3. Cette géométrie de positionnement des deux platines 10, 30 respectivement par le bras orienteur 13 et la mini perche 34, permet d'avoir une grande envergure pour la captation du courant sur la caténaire 3, tout en maintenant l'ensemble hors de portée des immeubles et autres objets voisins et en restant inscrit dans le gabarit du véhicule 1.

Le dispositif comporte en outre, de façon tout à fait préférentielle, des moyens 60 pour déterminer la position relative de l'archet 40 par rapport à la caténaire 3 quand sa piste de prise de courant électrique 41 est au contact avec elle, en au moins un point de contact 63, ces moyens 60 pour déterminer la position de l'archet étant aptes à délivrer un premier signal fonction de cette position relative, et un organe de traitement 61 apte à recevoir ce premier signal et à élaborer un second signal de commande des deuxièmes moyens commandables 23 pour faire pivoter le pivot 20 de façon que la partie sensiblement médiane de la piste de prise de courant électrique 41 se maintienne constamment au contact de la caténaire 3, et ce, quelle que soit la trajectoire du véhicule 1, du moins dans certaines limites acceptables, pour éviter le risque qu'il ne soit plus alimenté en énergie électrique.

Les moyens 60 pour déterminer la position de l'archet 40 par rapport à la caténaire 3 quand il est à son contact par la piste de prise de courant 41 peuvent être réalisés de différentes façons, avantageusement selon l'un des deux modes de réalisation ci-dessous :

Selon un premier mode de réalisation, ces moyens 60 comportent des moyens 69 pour déterminer, par rapport à au moins l'une des extrémités 64, 65 de la piste de prise de courant électrique 41, la position du point 63 de cette piste sur lequel est concentré le maximum de courant électrique provenant de la caténaire, ces moyens étant aptes à délivrer le premier signal défini ci-dessus en fonction de la position de ce point 63.

La figure 3, illustre de façon schématique, une première mise en oeuvre possible de ces moyens 69. Selon cette réalisation, ils comportent schématiquement une pluralité de connecteurs linéaires, tous reliés par une de leurs extrémités à des points discrets de la piste 41 et par leurs autres extrémités à une ligne électriquement conductrice unique reliant tous ces connecteurs au véhicule électrique pour alimenter par exemple son moteur (représenté schématiquement en Mo sur la figure 3). Sur chaque connecteur est placé un mesureur de courant comme une bobine dont les sorties sont reliées à un comparateur. Ce comparateur est agencé pour délivrer à sa sortie un signal, à savoir le premier signal, représentatif du connecteur qui est parcouru par le courant électrique qui a la plus grande valeur, et donc de la position du point 63 par rapport aux extrémités 64,65 de la piste 41.

Avec ce mode de réalisation, il peut être avantageux, par sécurité, de prévoir deux butées de fin de course respectivement aux deux extrémités de la piste de prise de courant 41, comme évoqué en traits interrompus sur la figure 3.

Selon un second mode de réalisation, les moyens 60 comportent au moins un capteur optique de distance 66, 67, figure 2, situé à une extrémité 64, 65 de la piste de prise de courant électrique 41 (avantageusement deux situés respectivement aux deux extrémités 64, 65 pour pouvoir utiliser la méthode dite "différentielle"), ce capteur optique de distance étant apte à délivrer, à sa sortie, le premier signal. Un tel capteur est connu en lui-même. Il comporte un générateur laser, généralement une diode laser associée à une cellule photosensible de réception de la lumière réfléchie sur la caténaire 3. Le capteur donne en sortie un signal représentatif de sa distance le séparant de la caténaire et donc du point de contact 63. Avec cette réalisation les deux capteurs peuvent en outre avoir une fonction de butée.

Selon une réalisation préférée, les deuxièmes moyens commandables 23 pour faire pivoter le pivot 20 par rapport à la première platine 20 autour du premier axe 22, comme défini ci-avant, comportent au moins un levier 24 dont une première extrémité est solidaire du pivot 20 et dont l'autre extrémité est en déport de ce même pivot, un second vérin 25, comme ceux définis précédemment, dont les deux extrémités sont connectées en rotation libre, respectivement à un premier point du levier 24 non situé sur le premier axe 22 et à un second point de la première platine 10 non situé sur le premier axe 22 et non confondu avec le premier point, et des moyens de commande de ce second vérin 25. Ces moyens de commande de ce second vérin 25 sont du même type que les moyens de commande 50 définis précédemment et peuvent donc être, comme illustré sur les figures 1 et 3, couplés avec eux.

Comme illustré sur la figure 2, peuvent aussi être prévus des moyens de stabilisation de la rotation du levier 24, comme les moyens 124 illustrés sur cette figure 2.

Selon une réalisation particulièrement avantageuse, le dispositif selon l'invention comporte en outre des moyens 70 pour déterminer la position relative de l'archet 40 par rapport à la caténaire 3, quand cet archet n'est pas au contact de la caténaire 3 par sa piste de prise de courant 41.

Ces derniers moyens 70 peuvent être réalisés de différentes façons. Cependant, il comportent de préférence des moyens pour déterminer la position du véhicule 1 par rapport à la caténaire 3 et des moyens pour déterminer la position de la seconde platine 30 par rapport au véhicule 1, la connaissance de ces deux paramètres permettant, par simple calcul, de déterminer la position relative de l'archet 40 par rapport à la caténaire 3 et donc d'agir sur l'ensemble du dispositif pour amener l'archet 40 au droit de la caténaire de façon, non pas manuelle, mais automatique.

Les moyens pour déterminer la position du véhicule 1 par rapport à la caténaire 3 sont avantageusement réalisés selon l'un des deux modes de réalisation i, ii suivants :
- (i) Selon un premier mode de réalisation, ils comportent au moins deux émetteurs lasers à balayage 71, 72 (avantageusement trois si cela est nécessaire, par exemple pour le cas de véhicules destinés à se déplacer dans un angle de propagation relativement large) montés en coopération avec le véhicule 1 en des points non confondus de ce dernier, ces deux émetteurs lasers étant agencés de façon que le pinceau de leur faisceau lumineux respectif 73, 74 se reflète sur la caténaire 3, et des moyens pour déduire, par la méthode de triangulation au moyen des faisceaux réfléchis sur la caténaire 3, la position du véhicule par rapport à la caténaire.
- (ii) Selon un second mode de réalisation, ils comportent au moins une caméra de stéréovision montée en coopération avec le véhicule 1 et un organe de traitement apte à traiter les images délivrées par la caméra de stéréovision pour déterminer la position du véhicule par rapport à la caténaire.

Les deux modes de réalisation (i) et (ii) ci-dessus sont connus en eux-mêmes et ne seront pas plus amplement décrits ici, dans le seul but de ne pas surcharger la présente description.

Il est précisé que, soit les deux émetteurs lasers à balayage, soit la caméra de stéréovision (qui comporte, comme connu en elle-même, au moins deux moyens de prise de vue pour obtenir le relief) sont montés en coopération de façon directe sur le véhicule 1, comme illustré sur la figure 2, ou de façon indirecte en étant montés par exemple sur l'une des deux platines 10, 20 quand le dispositif comporte, comme décrit ci-après, des moyens pour déterminer la position de ces platines par rapport au véhicule.

Selon un mode de réalisation possible, ces moyens pour déterminer la position des deux platines 10, 30 par rapport au véhicule 1 comportent des moyens de codage angulaire montés en coopération avec au moins un bras 13-14, 34-35 de chacun des deux parallélogrammes déformables associés respectivement aux deux platines 10, 30 et avec les deuxièmes moyens commandables 23.

Il est nécessaire de préciser que, par "codeur angulaire" au sens de la présente description, il est compris tout moyen qui permet, de façon directe ou indirecte, de déterminer la position angulaire d'un corps quelconque par rapport à un autre. Un tel codeur angulaire peut être constitué de l'un de ceux qui sont proposés sur le marché sous ce vocable. Mais il peut aussi être constitué de beaucoup d'autres façons. Comme illustré sur les figures annexées, il peut être constitué d'un système permettant de déterminer la longueur de déplacement d'une tige de vérin par rapport à son cylindre.

Connaissant la topologie relative aux points de liaison des vérins respectivement avec les platines et les bras de commande, la longueur de ces bras, etc., il est possible de déterminer la position de la platine 10 par rapport au véhicule 1, du pivot 20 par rapport à la platine 10 et de la platine 30 par rapport au pivot 20, et donc en finale la position de la platine 30 par rapport au véhicule 1.

Connaissant la position de la platine 30 par rapport au véhicule 1 et la position du véhicule 1 par rapport à la caténaire 3, il est possible, notamment par calcul au moyen de l'organe de traitement 61, par exemple de type informatique à microprocesseur, de déduire la position de l'archet 40 par rapport à la caténaire 3.

Selon un mode de réalisation avantageux, les moyens de commande 50 des vérins 16, 36, 25 définis précédemment et l'organe de traitement 61 peuvent être combinés dans un seul organe de calcul et de commande, comme illustré sur les figures 1 et 3.

En fonction de cette information, par asservissement, il est possible de commander automatiquement les différents moyens de vérin 16, 25, 37 pour amener la piste de prise de courant 41 de l'archet 40 au contact de la caténaire, puis, grâce aux moyens 60 définis précédemment, de contrôler, toujours par asservissement, la position de l'archet 40 de façon que la partie médiane de sa piste de prise de courant 41 reste constamment au contact de la caténaire 3.

Tous ces moyens concourent à ce que le véhicule soit toujours alimenté en énergie électrique, quelle que soit sa trajectoire et les incidents de parcours comme ceux mentionnés au préambule, et permettent d'atteindre les buts de l'invention définis ci-avant.

Il est cependant précisé que, dans le cas général d'un véhicule comme un trolleybus ou analogue nécessitant deux polarités en l'air (deux caténaires parallèles), une autre mini perche, par exemple dite "mini perche négative", est implantée symétriquement à l'autre extrémité de la première platine 10, comme évoqué par un autre pivot représenté partiellement 220. La mini perche négative, montée en coopération avec cet autre pivot 220 peut alors être commandée en parallèle avec la mini perche positive 34 grâce à une biellette de parallélisme (non représentée).

Les mini perches positive et négative, tout en ayant une même structure, peuvent avoir des longueurs légèrement différentes afin de séparer le champ d'évolution des organes terminaux, à savoir notamment les archets positifs et négatifs. Il est aussi possible de n'utiliser dans le dispositif selon l'invention qu'une seule mini perche 34 pour les véhicules 1 circulant par exemple sur une voie ferrée.

Il est aussi possible que, en cours de fonctionnement normal, un mouvement alternatif soit superposé au positionnement central de l'archet 41 précédemment décrit, ceci afin de mieux répartir l'usure de la piste de prise de courant 41.

## Revendications

1. Dispositif pour relier un véhicule électrique (1) à une caténaire (3) et permettre l'alimentation en électricité de ce véhicule à partir du courant électrique passant dans la caténaire, ledit véhicule étant apte à se déplacer sur un sol (2) et ladite caténaire (3) étant située dans un premier plan (4) sensiblement parallèle au dit sol à une distance de ce sol supérieure à la hauteur maximale du dit véhicule quand il roule sur le sol, comportant :
• une première platine (10),
• un pivot (20),
• des moyens (21) pour monter ledit pivot (20) en rotation sur la première platine (10) autour d'un premier axe (22), ledit premier axe étant sensiblement perpendiculaire à un deuxième plan (12) sensiblement parallèle au premier plan (4),
• des deuxième moyens commandables (23) pour faire pivoter ledit pivot (20) par rapport à ladite première platine (10) autour du dit premier axe (22),
• une seconde platine (30),
• des troisièmes moyens commandables (31) pour déplacer la seconde platine (30) parallèlement à elle-même par rapport au dit pivot (20) et dans un troisième plan (33) contenant ledit premier axe (22),
• un archet (40) comportant une piste de prise de courant électrique (41), ladite piste étant apte à frotter sur la caténaire (3), et
• des moyens (42) pour monter ledit archet (40) sur ladite seconde platine (30) de façon que la piste de prise de courant électrique (41) soit sensiblement parallèle aux dits premier et deuxième plans (4, 12),
**caractérisé par le fait qu'**il comporte en outre des premiers moyens commandables (11) pour déplacer la première platine (10) parallèlement à elle-même par rapport au dit véhicule et dans ledit deuxième plan (12).

2. Dispositif selon la revendication 1, **caractérisé par le fait que** lesdits premiers et troisièmes moyens commandables (11, 31) pour déplacer respectivement la première platine et la seconde platine (10, 30) comportent,
• au moins deux bras (13-14, 34-35) dont deux extrémités sont associées en rotation à ladite platine (10, 30) et dont les deux autres extrémités sont liées en rotation à l'élément (1, 20) par rapport auquel la platine doit être déplacée, de façon que les quatre extrémités des deux bras soient situées aux sommets d'un parallélogramme et que les deux bras (13-14, 34-35) forment parallélogramme déformable, et
• des quatrièmes moyens commandables (15, 36) pour appliquer une force sur l'un des deux bras (13-14, 34-35).

3. Dispositif selon la revendication 2, **caractérisé par le fait que** les quatrièmes moyens commandables (15, 36) pour appliquer une force sur l'un des deux bras (13-14, 34-35) comportent un premier vérin (16, 37) et des moyens de commande (50) du dit vérin.

4. Dispositif selon l'une des revendications 1 à 3, **caractérisé par le fait qu'**il comporte en outre :
• des moyens (60) pour déterminer la position du dit archet (40) par rapport à ladite caténaire (3) quand sa piste de prise de courant électrique (41) est au contact, en au moins un point de contact (63), avec ladite caténaire, ces moyens (60) pour déterminer la position du dit archet étant aptes à délivrer un premier signal fonction de ladite position, et
• un organe de traitement (61) apte à recevoir ledit premier signal et à élaborer un second signal de commande des dits deuxièmes moyens commandables (23) pour faire pivoter ledit pivot (20) de façon que la partie médiane de la piste de prise de courant électrique (41) se maintienne au contact de ladite caténaire.

5. Dispositif selon la revendication 4, **caractérisé par le fait que** les moyens pour déterminer la position du dit archet (40) par rapport à laite caténaire quand il est à son contact par ladite piste de prise de courant (41), sont constitués par l'un des deux moyens (i, ii) suivants :
• (i) des moyens (69) pour déterminer, par rapport à au moins l'une des extrémités (64, 65) de la piste de prise de courant électrique (41), la position du point (63) de cette piste sur lequel est concentré le maximum de courant électrique provenant de la caténaire, ces dits moyens étant aptes à délivrer ledit premier signal en fonction de la position de ce point de la piste (41),
• (il) au moins un capteur optique de distance (66, 67) situé à une extrémité (64, 65) de la piste de prise de courant électriques (41), ce capteur optique de distance étant apte à délivrer, à sa sortie, ledit premier signal.

6. Dispositif selon l'une des revendications 1 à 5, **caractérisé par le fait que** lesdits deuxièmes moyens commandables (23) pour faire pivoter ledit pivot (20) par rapport à ladite première platine (20) autour du dit premier axe (22) comportent au moins :
• un levier (24) dont une première extrémité est solidaire du pivot (20) et dont l'autre extrémité est en déport de ce même pivot,
• un second vérin (25) dont les deux extrémités sont connectées en rotation libre, respectivement à un premier point du levier (24) non situé sur ledit premier axe (22) et à un second point de la première platine (20) non situé sur le premier axe (22) et non confondu avec ledit premier point, et
• des moyens de commande (50) de ce second vérin (25).

7. Dispositif selon l'une des revendications précédentes, **caractérisé par le fait qu'**il comporte en outre des moyens (70) pour déterminer la position relative du dit archet (40) par rapport à ladite caténaire (3) quand ce dit archet n'est pas au contact de la caténaire (3) par sa piste de prise de courant (41).

8. Dispositif selon la revendication 7, **caractérisé par le fait que** les moyens (70) pour déterminer position relative du dit archet (40) par rapport à ladite caténaire (3) quand ce dit archet n'est pas au contact de la caténaire (3) par sa piste de prise de courant (41), comportent des moyens pour déterminer la position du véhicule (1) par rapport à ladite caténaire (3) et des
moyens pour déterminer la position de la seconde platine (30) par rapport au dit véhicule (1).

9. Dispositif selon la revendication 8, **caractérisé par le fait que** les moyens pour déterminer la position du véhicule (1) par rapport à la caténaire (3) comportent l'un des deux moyens (i, ii) suivants :
• (i) au moins deux émetteurs lasers à balayage (71, 72) montés en coopération en des points non confondus avec ledit véhicule (1), ces deux émetteurs lasers étant agencés de façon que les pinceaux de leurs faisceaux lumineux respectifs (73, 74) se reflètent sur ladite caténaire (3), et des moyens pour déduire par triangulation la position du véhicule par rapport à la caténaire,
• (ii) au moins une caméra stéréovision montée en coopération avec ledit véhicule (1) et un organe de traitement des images délivrées par ladite caméra stéréovision pour déterminer la position du véhicule par rapport à la caténaire.

10. Dispositif selon l'une des revendications 8 et 9, quand elle dépend de la revendication 2, **caractérisé par le fait que** les moyens pour déterminer la position de la seconde platine (30) par rapport au véhicule (1) comportent des moyens de codage angulaire montés en coopération avec au moins un bras (13-14, 34-35) de chacun des deux parallélogrammes déformables associés respectivement aux deux platines (10, 30) et avec les deuxièmes moyens commandables (23).

## Patentansprüche

1. Vorrichtung zum Verbinden eines Elektrofahrzeugs (1) mit einer Fahrleitung (3) und zum Ermöglichen der elektrischen Versorgung dieses Fahrzeugs anhand des in der Fahrleitung fließenden elektrischen Stroms, wobei das Fahrzeug sich auf einem Boden (2) bewegen kann und die Fahrleitung (3) sich in einer ersten Ebene (4) befindet, die zum Boden im Wesentlichen parallel ist und sich in einem Abstand von dem Boden befindet, der größer als die maximale Höhe des Fahrzeugs ist, wenn dieses auf dem Boden rollt, die umfasst:
- eine erste Platte (10),
- ein erstes Drehgelenk (20),
- Mittel (21) zur drehbaren Montage des Drehgelenks (20) an der ersten Platte (10) um eine erste Achse (22), wobei die erste Achse zu einer zweiten Ebene (12), die zu der ersten Ebene (4) im Wesentlichen parallel ist, im Wesentlichen senkrecht ist,
- zweite steuerbare Mittel (23), um das Drehgelenk (20) in Bezug auf die erste Platte (10) um die erste Achse (22) zu schwenken,
- eine zweite Platte (30),
- dritte steuerbare Mittel (31) zum Verlagern der zweiten Platte (30) parallel zu sich selbst in Bezug auf das Drehgelenk (20) und in einer dritten Ebene (33), die die erste Achse (22) enthält,
- einen Bügel (40), der einen Stromabnehmersteg (41) umfasst, wobei der Steg an der Fahrleitung (3) reiben kann, und
- Mittel (42) zum Montieren des Bügels (40) an der zweiten Platte (30) in der Weise, dass der Stromabnehmersteg (41) zu der ersten und der zweiten Ebene (4, 12) im Wesentlichen parallel ist,
**dadurch gekennzeichnet, dass** sie außerdem erste steuerbare Mittel (11) umfasst, um die erste Platte (10) parallel zu sich selbst in Bezug auf das Fahrzeug und in der zweite Ebene (12) zu verlagern.

2. Vorrichtung nach Anspruch 1, **dadurch gekennzeichnet, dass** die ersten und die dritten steuerbaren Mittel (11, 31) zum Verlagern der ersten Platte bzw. der zweiten Platte (10, 30) umfassen:
- wenigstens zwei Arme (13-14, 34-35), wovon zwei Enden mit der Platte (10, 30) drehbar verbunden sind und wovon die zwei anderen Enden mit dem Element (1, 20), in Bezug auf das die Platte verlagert werden soll, drehbar verbunden sind, derart, dass sich die vier Enden der zwei Arme an den Ecken eines Parallelogramms befinden und dass die zwei Arme (13-14, 34-35) ein verformbares Parallelogramm bilden, und
- vierte steuerbare Mittel (15, 36), um auf einen der zwei Arme (13-14, 34-35) eine Kraft auszuüben.

3. Vorrichtung nach Anspruch 2, **dadurch gekennzeichnet, dass** die vierten steuerbaren Mittel (15, 36) zum Ausüben einer Kraft auf einen der zwei Arme (13-14, 34, 35) einen ersten Stellzylinder (16, 37) und Mittel (50) zum Steuern des Stellzylinders umfassen.

4. Vorrichtung nach einem der Ansprüche 1 bis 3, **dadurch gekennzeichnet, dass** sie außerdem umfasst:
- Mittel (60) zum Bestimmen der Position des Bügels (40) in Bezug auf die Fahrleitung (3), wenn sein Stromabnehmersteg (41) an wenigstens einem Kontaktpunkt (63) mit der Fahrleitung in Kontakt ist, wobei diese Mittel (60) zum Bestimmen der Position des Bügels dafür ausgelegt sind, ein erstes Signal als Funktion der Position zu liefern und
- ein Verarbeitungsorgan (61), das dafür ausgelegt ist, das erste Signal zu empfangen und ein zweites Steuersignal für die zweiten steuerbaren Mittel (23) zu erzeugen, um das Drehgelenk (20) in der Weise zu schwenken, dass der Mittelteil des Stromabnehmstegs (41) in Kontakt mit der Fahrleitung gehalten wird.

5. Vorrichtung nach Anspruch 4, **dadurch gekennzeichnet, dass** die Mittel zum Bestimmen der Position des Bügels (40) in Bezug auf die Fahrleitung, wenn er über den Stromabnehmsteg (41) in Kontakt ist, durch eines der zwei folgenden Mittel (i, ii) gebildet sind:
- (i) Mittel (69) zum Bestimmen in Bezug auf wenigstens eines der Enden (64, 65) des Stromabnehmstegs (41) der Position des Punkts (63) dieses Stegs, an dem der maximale elektrische Strom von der Fahrleitung konzentriert ist, wobei diese Mittel dafür ausgelegt sind, das erste Signal als Funktion der Position dieses Punkts des Stegs (41) zu liefern,
- (ii) wenigstens einen optischen Abstandssensor (66, 67), der sich an einem Ende (64, 65) des Stromabnehmerstegs (41) befindet, wobei dieser optische Abstandssensor dafür ausgelegt ist, an seinem Ausgang das erste Signal zu liefern.

6. Vorrichtung nach einem der Ansprüche 1 bis 5, **dadurch gekennzeichnet, dass** die zweiten steuerbaren Mittel (23) zum Schwenken des Drehgelenks (20) in Bezug auf die erste Platte (20) um die erste Achse (22) wenigstens umfassen:
- einen Hebel (24), dessen erstes Ende mit dem Drehgelenk (20) fest verbunden ist und dessen andere Ende zu diesem Drehgelenk versetzt ist,
- einen zweiten Stellzylinder (25), dessen zwei Enden frei drehbar mit einem ersten Punkt des Hebels (24), der sich nicht auf der ersten Achse (22) befindet, bzw. mit einem zweiten Punkt der ersten Platte (20), der sich nicht auf der ersten Achse (22) befindet und der nicht mit dem ersten Punkt zusammenfällt, verbunden sind, und
- Mittel (50) zum Steuern dieses zweiten Stellzylinders (25).

7. Vorrichtung nach einem der vorhergehenden Ansprüche, **dadurch gekennzeichnet, dass** sie außerdem Mittel (70) umfasst, um die relative Position des Bügels (40) in Bezug auf die Fahrleitung (3) zu bestimmen, wenn dieser Bügel nicht über seinen Stromabnehmersteg (41) mit der Fahrleitung (3) in Kontakt ist.

8. Vorrichtung nach Anspruch 7, **dadurch gekennzeichnet, dass** die Mittel (70) zum Bestimmen der relativen Position des Bügels (40) in Bezug auf die Fahrleitung (3) Mittel umfassen, um dann, wenn dieser Bügel nicht über seinen Stromabnehmersteg (41) mit der Fahrleitung (3) in Kontakt ist, die Position des Fahrzeugs (1) in Bezug auf die Fahrleitung (3) zu bestimmen, und Mittel umfassen, um die Position der zweiten Platte (30) in Bezug auf das Fahrzeug (1) zu bestimmen.

9. Vorrichtung nach Anspruch 8, **dadurch gekennzeichnet, dass** die Mittel zum Bestimmen der Position des Fahrzeugs (1) in Bezug auf die Fahrleitung (3) eines der zwei folgenden Mittel (i, ii) umfassen:
- (i) wenigstens zwei Abtastlaser-Sender (71, 72), die in Zusammenwirkung mit dem Fahrzeug (1) an nicht zusammenfallenden Punkten montiert sind, wobei diese Laser-Sender so beschaffen sind, dass die Strahlen ihrer jeweiligen Lichtbündel (73, 74) an der Fahrleitung (3) reflektiert werden, und Mittel zum Ableiten durch Triangulation der Position des Fahrzeugs in Bezug auf die Fahrleitung,
- (ii) wenigstens eine Stereosicht-Kamera, die in Zusammenwirkung mit dem Fahrzeug (1) montiert ist, und ein Organ zum Verarbeiten von Bildern, die von der Stereosicht-Kamera geliefert werden, um die Position des Fahrzeugs in Bezug auf die Fahrleitung zu bestimmen.

10. Vorrichtung nach einem der Ansprüche 8 und 9, wenn abhängig von Anspruch 2, **dadurch gekennzeichnet, dass** die Mittel zum Bestimmen der Position der zweiten Platte (30) in Bezug auf das Fahrzeug (1) Winkelcodierungsmittel umfassen, die in Zusammenwirkung mit wenigstens einem Arm (13-14, 34-35) jedes der zwei verformbaren Parallelogrammen, die den zwei Platten (10, 30) entsprechend zugeordnet sind, und mit den zwei steuerbaren Mitteln (23) montiert sind.

## Claims

1. Device for connecting an electric vehicle (1) to a catenary (3) and to allow to feed this vehicle on electricity with the electric current passing in the catenary, said vehicle being able to move on a ground (2) and said catenary (3) being located in a first plane (4) substantially parallel to said ground at a distance from this ground higher than the maximum height of said vehicle when it is running on the ground, said device comprising :
• a first plate (10),
• a pivot (20),
• means (21) for mounting said pivot (20) rotatably on the first plate (10) around a first axis (22), said first axis being substantially perpendicular to a second plane (12) substantially parallel to the first plane (4),
• second controllable means (23) for rotating said pivot (20) relative to said first plate (10) around said first axis (22),
• a second plate (30),
• third controllable means (31) for moving the second plate (30) parallel to itself relative to said pivot (20) and in a third plane (33) containing said first axis (22),
• a bow (40) comprising a track of a current take-off pole (41) said track being able to rub on the catenary (3), and
• means (42) for assembling said bow (40) on said second plate (30) so that the track of current take-off pole (41) is substantially parallel to said first and second planes (4, 12),
**characterized by** the fact that it further comprises first controllable means (11) for moving the first plate (10) parallel to itself with respect to said vehicle and in said second plane (12).

2. Device according to claim 1, **characterized by** the fact that said first and third controllable means (11, 31) for respectively moving the first plate and the second plate (10, 30) comprise :
• at least two arms (13-14, 34-35) whose two ends are rotatably associated with said plate (10, 30) and whose the other two ends are rotatably linked to the element (1, 20) relative to which the plate must be moved, so that the four ends of the two arms are located at the vertices of a parallelogram and that the two arms (13-14, 34-35) form a deformable parallelogram, and
• fourth controllable means (15, 36) for applying a force to one of the two arms (13-14, 34-35).

3. Device according to claim 2, **characterized by** the fact that the fourth controllable means (15, 36) for applying a force to one of the two arms (13-14, 34-35) comprises a first actuator (16, 37) and control means (50) for controlling said actuator.

4. Device according to one of claims 1 to 3, **characterized by** the fact that it further comprises:
• means (60) for determining the position of said bow (40) relative to said catenary (3) when its track of current take-off pole (41) is in contact, at least on one contact point (63), with said catenary, said means (60) for determining the position of said bow being adapted to output a first signal according to said position, and
• a processor unit (61) adapted to receive said first signal and to deliver a second control signal for controlling said second controllable means (23) for pivoting said pivot (20) so that the middle portion of the track of current take-off pole (41) is maintained in contact with said catenary.

5. Device according to claim 4, **characterized by** the fact that the means for determining the position of said bow (40) relative to said catenary when it is in contact with said track of the current take-off pole (41), are constituted by one of the two following means (i, ii) :
• (i) means (69) for determining, with respect to at least one of the ends (64, 65) of the track of current take-off pole (41), the position of the point (63) of this track on which is concentrated the maximum of electric current coming from the catenary, said means being adapted to supply said first signal as a function of the position of this point of the track (41),
• (ii) at least one distance optical sensor (66, 67) located at one end (64, 65) of the track of current take-off pole (41), this distance optical sensor being able to deliver said first signal on its output.

6. Device according to one of claims 1 to 5, **characterized by** the fact that said second controllable means (23) for pivoting said pivot (20) relative to said first plate (10) around said first axis (22) comprise at least:
• a lever (24) whose a first end is secured to the pivot (20) and whose the other end is in offset of this same pivot,
• a second actuator (25) whose the two ends are connected in free rotation, respectively at a first point of the lever (24) not located on said first axis (22) and a second point of the first plate (10) not located on the first axis (22) and who does not coincide with said first point, and
• control means (50) for controlling this second actuator (25).

7. Device according to one of the preceding claims, **characterized by** the fact that it further comprises means (70) for determining the relative position of said bow (40) relative to said catenary (3) when said bow is not in contact with the catenary (3) by its track of current take-off pole (41).

8. Device according to claim 7, **characterized by** the fact that the means (70) for determining relative position of said bow (40) relative to said catenary (3) when said bow is not in contact with the catenary (3) by its track of current take-off pole (41), comprises means for determining the position of the vehicle (1) relative to said catenary (3) and means for determining the position of the second plate (30) relative to said vehicle (1).

9. Device according to claim 8, **characterized by** the fact that said means for determining the position of the vehicle (1) relative to the catenary (3) comprises one of the two following means (i, ii):
• (i) at least two scanning laser emitters (71, 72) assembled in co-operation with said vehicle (1) on two different points, these two laser emitters being arranged such that the brushes of their respective light beams (73, 74) are reflected on said catenary (3), and means for deducing by triangulation the vehicle position relative to the catenary,
• (ii) at least a stereovision camera mounted in co-operation with said vehicle (1) and a processor unit for processing the images delivered by said stereovision camera for determining the position of the vehicle relative to the catenary.

10. Device according to one of claims 8 and 9 as dependent on claim 2, **characterized by** the fact that the means for determining the position of the second plate (30) relative to the vehicle (1) comprises angular coding means assembled in co-operation with at least one arm (13-14, 34-35) of each of the two deformable parallelograms respectively associated with the two plates (10, 30) and with the second controllable means (23).
